# EUROPÄISCHE PATENTSCHRIFT

(11) **EP 0 411 412 B1**
(45) Veröffentlichungstag und Bekanntmachung des Hinweises auf die Patenterteilung: **04.05.1994**
(21) Anmeldenummer: 90113937.8
(22) Anmeldetag: 20.07.1990
(51) Int. Cl.: B01D 53/02, B01D 53/34, C01B 31/08

(54) **Verfahren und Vorrichtung zum Aufarbeiten von mit Schwermetall beladenen Aktivkohlen**
Process and apparatus for regenerating active carbon loaded with heavy metals
Procédé et dispositif pour régénérer du charbon actif chargé de métaux lourds

(30) Priorität: 01.08.1989 DE 3925399
(43) Veröffentlichungstag der Anmeldung: 06.02.1991
(73) Patentinhaber: Rheinbraun Aktiengesellschaft, 50935 Köln (DE)
(72) Erfinder: Ritter, Günter, Dr.-Ing., D-5040 Brühl (DE); Eicken, Mirko, Dipl.-Ing., D-5000 Köln (DE); Erken, Manfred, Dipl.-Ing., D-5010 Bergheim (DE); Felgener, Gerd W., Dipl.-Ing., D-4048 Grevenbroich (DE); Menge, Franz-Josef, Dipl.-Ing., D-5024 Pulheim (DE)
(74) Vertreter: Koepsell, Helmut, Dipl.-Ing.

(56) Entgegenhaltungen:
- EP-A- 0 299 340
- DE-A- 3 307 087
- FR-A- 2 339 428
- GB-A- 2 016 120
- US-A- 1 863 803
- GWF-GAS/ERDGAS, Band 113, Nr. 3, 1972, Seiten 127-131; H. JÜNTGEN et al.:"Die Entschwefelung von Abgasen nach dem Verfahren der Bergbau-Forschung"

## Beschreibung

Die Erfindung betrifft ein Verfahren und eine Vorrichtung zum Aufarbeiten von Aktivkohlen, insbesondere Koks, welche mit Schwermetall beladen sind und vor der Beladung mit Schwefelsäure dotiert wurden.

Ein solches Verfahren ist aus der FR-A-2334928 bekannt, wobei zur Erhöhung der Beladungskapazität der Aktivkohle letztere außer mit Schwefelsäure auch mit Jod dotiert wird. Es ist auch eine Regenerierung der Aktivkohle vorgesehen, wobei die beladene Aktivkohle durch einen Reaktor mit einer Desorptionszone hindurchgeführt wird, die eine Temperatur von etwa 450° C aufweist. In dieser Desorptionszone wird die erwärmte Aktivkohle mit einem Schleppgas beaufschlagt, welches das Quecksilber aufnimmt, welches durch Kondensation aus dem Schleppgas abgetrennt werden kann.

Weiterhin ist aus der US-A-1,863,803 eine Vorrichtung zum Regenerieren von Aktivkohle bekannt, die mit einer Reaktionszone zum Hindurchführen des beladenen Kokses sowie einer Heizung und einer Einrichtung zum Einleiten eines Schleppgases versehen ist. Die von letzterem von der zu regenerierenden Aktivkohle aufgenommenen Substanzen werden mittels Kondensieren aus dem Schleppgas entfernt.

Beim Entfernen von Schwermetallen aus Gasen und Abluft mit Hilfe von Aktivkohle können nach bekannten Verfahren recht hohe Abscheidungsgrade erzielt werden, solange es sich um kleinere Abgasströme mit geringem Staubgehalt handelt. So kann eine Beladung von Aktivkohle mit Quecksilber bis zu 30 Gew.-% erreicht werden. Da es sich in diesen Fällen nur um verhältnismäßig kleine Mengen von beladener Aktivkohle handelt, bereitet deren anschließende Entsorgung oder eine Regenerierung keine besonderen Schwierigkeiten.

Problematisch hingegen wird die Abscheidung von Schwermetallen aus den Rauchgasen von größeren Verbrennungsanlagen, beispielsweise Müllverbrennungsanlagen, mit Hilfe von Aktivkoks bzw. Substanzen, die der Aktivkohle ähnliche Eigenschaften haben. Hier bereitet die Abscheidung von Quecksilber aus den Rauchgasen besondere Schwierigkeiten. So konnte großtechnisch nachgewiesen werden, daß Quecksilber zwar schon auf den ersten Zentimetern einer Koksschicht vollständig festgehalten wird, welche von dem beladenen Rauchgas durchströmt wird, aber wegen der mehr oder weniger hohen gleichzeitigen Staubbeladung des zu reinigender Rauchgases eine zufriedenstellende Anreicherung des Quecksilbers auf dem Koks nicht möglich ist, da sich das Koksfilter mit dem Staub schnell zusetzt und ausgewechselt werden muß. Infolge der raschen Verschmutzung der für die Abscheidung des Quecksilbers vorgesehenen Schicht aus Aktivkohle bzw. Koksschicht durch die mit dem Rauchgas mitgeführten Stäube wurde es erforderlich, daß diese wirksame Schicht häufig gewechselt werden muß. Damit aber bleibt deren Beladung mit Schwermetall unterhalb von deren Adsorptionsfähigkeit. Mit anderen Worten, die aktive Reinigungsschicht muß häufiger gewechselt werden als notwendig, weil sie zu früh verstaubt. Mit den bekannten Verfahren lassen sich beispielsweise hinter Müllverbrennungsanlagen Quecksilberbelastungen bis zu etwa 500 mg/kg in der Aktivkohle bzw. adsorptionsfähigen Schicht zwar technisch verwirklichen, aber die Entsorgung von relativ großen, nur leicht mit Quecksilber verunreinigten Adsorbermassen ist problematisch und daher mit hohem wirtschaftlichen Aufwand verbunden.

Vor diesem Hintergrund ergibt sich die Aufgabe der vorliegenden Erfindung, ein Verfahren zu entwickeln, mit dessen Hilfe nur wenig mit Schwermetallen verunreinigte Aktivkohlen bzw. Kokse ohne großen Aufwand leicht aufgearbeitet und einem weiteren Verwendungszweck zugeführt werden können. Dabei soll das Verfahren ohne großen apparativen Aufwand mit hoher Betriebssicherheit und guter Wirtschaftlichkeit durchführbar sein. Gleichzeitig besteht die Aufgabe der Erfindung darin, eine Vorrichtung anzugeben, mit deren Hilfe größere Mengen von Aktivkohlen bzw. Aktivkoksen, die mit Staub und mit Schwermetallen beladen sind, in relativ kurzer Zeit durchgesetzt und desorbiert werden können.

Diese Aufgabe wird bei einem Verfahren gemäß dem Oberbegriff des Anspruches 1 dadurch gelöst, daß das beladene Schleppgas unter Zufuhr von Luft durch eine ruhende Schüttung aus mit Schwefelsäure dotiertem Koks hindurchgeleitet wird, welcher das Schwermetall adsorbiert.

Bei der Durchführung des erfindungsgemäßen Verfahrens macht man sich die bekannte Tatsache zu Nutze, daß Aktivkohlen bzw. Koks, welche vorher mit Schwefelsäure dotiert wurden, besonders gut dazu geeignet sind, Quecksilber zu adsorbieren. Warum das so ist, ist im Einzelnen nicht bekannt. Es kann vermutet werden, daß die Rückhaltung des Quecksilbers auf den mit Schwefelsäure dotierten Aktivkohlen bzw. Koksen durch die Bildung von HgSO₄ ermöglicht wird, welches durch die chemische Reaktion mit der Schwefelsäure gebildet wird und auf der Oberfläche des Ad- bzw. Absorbionsmittels festgehalten wird. Dabei ist die Höhe der max. möglichen Belastung der Aktivkohle mit Quecksilber abhängig von der Menge der in die Aktivkohle eingebrachten Schwefelsäure.

Eine Erhöhung der Adsorptionsfähigkeit von nur mit geringen Mengen von Schwefelsäure dotierten Aktivkohlen bzw. Koks kann durch das erfindungsgemäße Verfahren dadurch erzielt werden, daß geringe Mengen von sauerstoffhaltigen Gasen, z. B. Luft, oberhalb des Desorptionsreaktors zugegeben werden, worin das Schleppgas zugeführt wird, welches die Schadstoffe aus dem Koks adsorbiert, der zur Reinigung des Rauchgases vorgesehen ist. Durch die Zufuhr von Luft können hohe Quecksilberkonzentrationen auf der letztlich zu entsorgenden Schüttung von Aktivkohle bzw. Koks erzielt werden.

Bei der Behandlung des mit Quecksilber und Staub durch die Rauchgase einer Müllverbrennungsanlage verunreinigten Kokses in dem erfindungsgemäßen Reaktor bei 500° C wird neben den Schwermetallen und den sonstigen Verunreinigungen auch SO₂ freigesetzt. Diese Freisetzung erfolgt durch Reduktion der Sulfate bzw. der Schwefelsäure:

C + 2 H₂SO₄ -> 2 SO₂ + 2 H₂O + CO₂

Mit dem zugeführten Sauerstoff der Luft reagiert das auf diese Weise freigesetzte SO₂ in den kälteren Zonen (z. B. 100° C) wieder zu Schwefelsäure:

SO₂ + 1/2 O₂ + H₂O -> H₂SO₄.

Diese Schwefelsäure wird in die Aktivkohle bzw. den Koks eingelagert.

Somit kann nach dem erfindungsgemäßen Verfahren selbst bei Aktivkohlen bzw. Koks, die nur eine sehr geringe Menge an Quecksilber und Sulfaten bzw. Schwefelsäure enthalten, eine sehr hohe Konzentration von Quecksilber erzielt werden.

Weitere vorteilhafte Ausgestaltungen des erfindungsgemäßen Verfahrens sowie der Vorrichtung ergeben sich aus den Unteransprüchen.

Nachfolgend wird die Erfindung anhand eines Ausführungs- und Anwendungsbeispiels näher beschrieben.

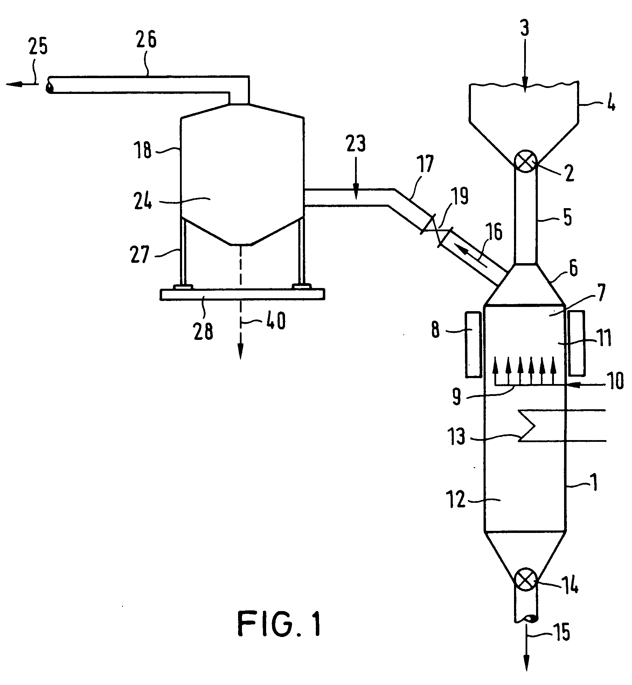

Es zeigen jeweils in schematischer, vereinfachter und nicht maßstäblicher Darstellung
- Fig. 1: eine Vorrichtung zum Aufarbeiten von mit Schwermetall beladenem Koks,
- Fig. 2: den Einsatz der Vorrichtung nach Fig. 1 innerhalb einer Verbrennungsanlage für Müll und
- Fig. 3: die Ausgestaltung der oberen Teile eines Reaktors entsprechend der Fig. 1.

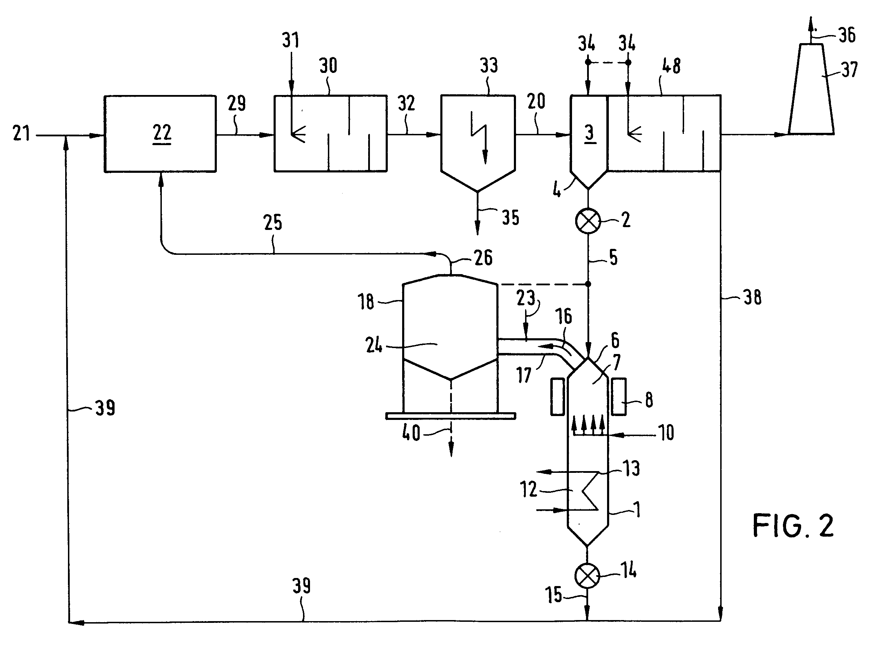

Die Vorrichtung zum Aufarbeiten von mit Schwermetall beladenem Aktivkoks weist ein senkrechtes Reaktionsrohr 1 auf, welches beispielsweise einen runden Querschnitt mit einem Durchmesser von 0,2 m hat. Das Reaktionsrohr 1 hat eine gesamte Länge von etwa 3 m. Oberhalb des Reaktionsrohres 1 befindet sich eine Zellenradschleuse 2, welche zum Abziehen von mit geringen Mengen Schwermetall beladenem Koks 3 aus einem Behälter 4 vorgesehen ist. Bei dem Behälter 4 kann es sich beispielsweise um einen Behälter handeln, welcher von dem Rauchgas 20 durchströmt wird, das bei der Verbrennung von Müll 21 im Kessel 22 einer Müllverbrennungsanlage entsteht( Fig. 2).

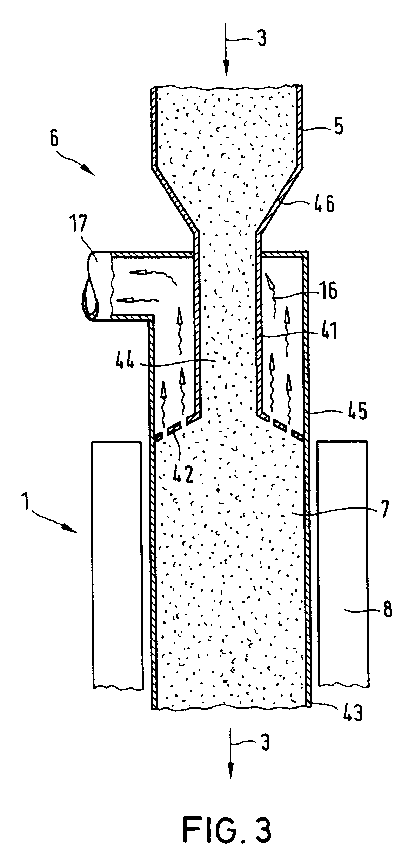

Der Behälter 4 ist mit dem Reaktionsrohr 1 über ein Fallrohr 5 verbunden, welches in einer Abzugshaube 6 mündet, die oberhalb des Reaktionsrohres 1 angeordnet ist. Einzelheiten der Ausgestaltung sind im Zusammenhang mit Fig. 3 beschrieben.

Im oberen Bereich, dessen Länge ungefähr einen Meter beträgt, des Reaktionsrohres 1 befindet sich eine erste Reaktionszone 7, welche von einer Heizung 8, die außerhalb der Reaktionszone 7 um das Reaktionsrohr 1 angeordnet ist, beeinflußt wird. Die Heizung 8 bewirkt, daß der innerhalb der Reaktionszone 7 befindliche Koks 3 auf eine Temperatur von etwa 500° C erwärmt und innerhalb der Reaktionszone 7 5 - 20 min, vorzugsweise 10 - 15 min lang bei dieser Temperatur gehalten wird. Unterhalb der Reaktionszone 7 ist eine Einrichtung 9 vorgesehen, über welche ein Schleppgas 10 in die innerhalb der Reaktionszone 7 befindliche erwärmte Koksschüttung 11 eingeleitet wird. Bei dem Schleppgas handelt es sich um ein Inertgas, beispielsweise Stickstoff, CO₂ oder auch Luft, welches mit geringer Geschwindigkeit über die Einrichtung 9 in die Schüttung 11 eingeblasen wird.

Unterhalb der Reaktionszone 7 befindet sich eine weitere Zone 12, welche Wärmetauschereinbauten 13 aufweist, an denen der erwärmte Koks abgekühlt wird. Der abgekühlte Koks wird aus der Zone 12 schließlich über eine Zellenradschleuse 14 unterhalb des Reaktionsrohres 1 abgezogen und einer weiteren Verwendung, beispielsweise Verbrennung, zugeführt. Die axiale Länge der Zone 12 innerhalb des Reaktionrohres 1 beträgt etwa 2 m. An Schleppgas 10 werden ungefähr 5 m³/h in die Schüttung 11 eingebracht. Der Durchsatz an Koks 3 durch das Reaktionsrohr 1 beträgt etwa 30 kg/h. Etwa die gleiche Menge wird als gereinigter Koks 15 unterhalb des Reaktionsrohres 1 wieder abgezogen.

Bei dem Durchleiten des Schleppgases 10 durch die erwärmte Koksschüttung 11 belädt sich das Schleppgas mit dem Schwermetall des Kokses 3.

Das mit dem Schwermetall aus dem Koks 3 beladene Schleppgas 16 sammelt sich zunächst in der Abzugshaube 6 am oberen Ende des Reaktionsrohres 1, bevor es in eine Verbindungsleitung 17 eintritt, welche zu einem weiteren Behälter 18 führt. Das Reaktionsrohr 1 und der Behälter 18 sind über die Verbindungsleitung 17 miteinander verbunden und können nach Bedarf über ein Absperrorgan 19 voneinander getrennt werden. In der Verbindungsleitung 17 befindet sich außerdem noch ein Anschluß 23, über welchen dem beladenem Schleppgas 16 Luft zugeführt werden kann.

Beim Durchleiten des Schleppgases 10 durch die erwärmte Koksschüttung 11 bereitet der innerhalb der letzteren befindliche Staub keine Probleme. Insbesondere ist nicht zu befürchten, daß das Schleppgas den Staub aus der im Reaktionsrohr 1 befindlichen Koksschüttung austrägt und in den Behälter 18 transportiert und das darin befindliche Koksbett 24 verstopft. Für die Desorption werden nur relativ kleine Gasmengen benötigt, die zudem mit sehr geringer Geschwindigkeit durch das im Reaktionsrohr 1 befindliche Koksbett 11 strömen. Insbesondere aufgrund der geringen Strömungsgeschwindigkeit wird verhindert, daß Staub aus dem Koksbett 11 vom Schleppgas 16 mitgerissen wird. Im übrigen könnte in der Leitung 17 ohne weiteres ein Staubfilter vorgesehen sein um zu gewährleisten, daß kein Staub aus dem Reaktionsrohr 1 in den Behälter 18 getragen wird.

Der Behälter 18 ist zur Aufnahme einer zweiten Reaktionszone 24 vorgesehen, welche ebenfalls aus Koks besteht. Diese Reaktionszone 24 besteht beispielsweie aus Herdofenkoks, der durch die Verkokung von Braunkohle auf dem Herdofen hergestellt und anschließend mit Schwefelsäure dotiert wurde. In die Reaktionszone 24 kann aber auch Koks 3 eingeführt werden, welcher die Voraussetzungen der Dotierung mit Schwefelsäure aufweist und nur in einem geringen Umfange mit Quecksilber beladen ist, beispielsweise Koks 3 aus dem Behälter 4.

Der in der Reaktionszone 24 befindliche Koks hat nun die Aufgabe, das mit dem Schwermetall beladene Schleppgas 16 wieder zu reinigen und sich dabei selbst mit Schwermetall zu beladen. Diese Schwermetallbeladung des Kokses in der zweiten Reaktionszone 24 kann bis zu 20 Gew.% betragen. Beispielsweise fallen bei einer Quecksilberbeladung des Kokses 24 in der Höhe von 10 % etwa 5 t/a Koks 24 zur endgültigen Entsorgung an. Dabei fallen jährlich bis zu 500 kg Quecksilber an.

Das von den Schwermetallen befreite Schleppgas 25 verläßt den Behälter 18 über einen Anschluß 26.

Der Behälter 18 steht auf Füßen 27 und einer Kufe 28 und ist zum Transport geeignet. Der Behälter 18 ist auch verschließbar. Als besonders geeignet hat sich die Verwendung eines Behälters 18 erwiesen, wie er den Gegenstand des deutschen Gebrauchsmusters G 89 03 669.7 bildet, welches für die Anmelderin eingetragen wurde.

Das den Behälter 18 verlassende gereinigte Schleppgas 25 enthält noch gasförmige Schadstoffe, wie z. B. SO₂, sowie Stäube und wird deshalb dem Kessel 22 einer Mullverbrennungsanlage zugeführt (Fig. 2). Bei der Verbrennung des Mulls 21 im Kessel 22 entsteht ein Rauchgas 29, welches sowohl mit Staub, als auch mit Schwefelverbindungen sowie mit Schwermetallen beladen ist. Dieses stark mit Verunreinigungen und Staub beladene Rauchgas 29 wird zunächst in eine Reaktionsstufe 30 eingeführt, wo es mit kalziumhaltigen Substanzen 31 innig vermischt wird, so daß der größte Teil der Schwefelverbindungen aus dem Rauchgas 29 entfernt wird. Das innerhalb des Reaktors 30 vom größten Teil seiner Schwefelverunreinigungen gereinigte Rauchgas 32 wird einem Elektrofilter 33 zugeführt, wo die Stäube aus dem Rauchgas 32 abgeschieden werden und unterhalb des Elektrofilters 33 als Abfall 35 abgezogen werden können. Das entstaubte und weitgehend von Schwefel befreite Rauchgas 20 wird nunmehr durch einen Behälter 4 hindurchgeschickt, wo der restliche Schwefel und die Schwermetallverbindungen entfernt werden. Innerhalb des Behälters befindet sich eine Schüttung aus einer kohlenstoffhaltigen Substanz, beispielsweise Aktivkohle oder Koks, die bzw. der als frische Substanz 34 oberhalb des Behälters 4 aufgegeben wird.

Während der Durchströmung mit dem Rauchgas 20 belädt sich die Substanz 34 mit dem restlichen Schwefel, der in dem Rauchgas 20 noch vorhanden ist und wird auf diese Weise befähigt, die Schwermetallverbindungen aus dem Rauchgas 20 zu adsorbieren. Die beladene kohlenstoffhaltige Substanz 3 wird schließlich über die Zellenradschleuse 2 abgezogen und über das Fallrohr 5 dem erfindungsgemäßen Reaktionsrohr 1 zugeführt, wo deren Aufarbeitung erfolgt.

Im Anschluß an den Behälter 4 oder als Baueinheit damit zusammengefaßt befindet sich ein weiterer Reaktor 48, der ebenfalls mit der kohlenstoffhaltigen Substanz 34 beschickt wird und dazu vorgesehen ist, die restlichen Schadstoffe aus dem Rauchgas 20 zu entfernen, bevor es als gereinigtes Rauchgas 36 über den Kamin 37 an die Atmosphäre abgegeben werden kann. Die verbrauchte Substanz 38 wird aus dem Reaktor 35 abgezogen und kann, mit dem aufgearbeiteten Koks zusammengeführt, als Brennstoff 39 zur Verbrennung in dem Kessel 22 vorgesehen werden, wobei die Substanz 39 zweckmäßig gemeinsam mit dem Müll 21 vor dem Kessel 22 zusammengeführt wird, bevor sie verbrannt wird.

Der eine hohe Schadstoffbeladung aufweisende Koks der zweiten Reaktionszone 24 kann sowohl unterhalb des Behälters 18 abgezogen und entsorgt werden als auch gemeinsam mit dem Behälter zu einer anderen Entsorgungsstelle überführt werden. Hierbei ist auch an die Möglichkeit gedacht, den in hohem Maß mit Schwermetall beladenen Koks 40 zusammen mit dem Behälter 18 deponiemäßig zu entsorgen. Da der stark beladene Koks 40 nur in vergleichweise geringen Mengen anfällt, ist eine Füllung des Behälters 18 mit 500 kg Koks ausreichend, die Masse der Schwermetallbeladung des Rauchgases einer gesamten Müllverbrennunganlage über den Zeitraum von einem Jahr aufzunehmen.

Eine Möglichkeit zur konstruktiven Ausgestaltung der Abzugshaube 6 zeigt Fig. 3. Das Fallrohr 5 weist einen trichterförmigen Übergang 46 zu einem Abschnitt 41 mit verringertem Querschnitt auf. Der Abschnitt 41 stutzt sich über eine schräggestellte Lochscheibe 42 auf dem Mantel 43 oder Gehäuse des Reaktors 1 ab. In Höhe der Lochscheibe 42 beginnt die Heizung 8, welche den Mantel 43 außen umgibt oder auch in den Mantel 43 eingebaut (nicht gezeigt) sein kann.

Der Koks 3 wird auf dem durch die Pfeile angezeigten Wege von oben nach unten durch den Reaktor 1 hindurchgeführt. Der Koks 3 resorbiert Quecksilber leicht in kälteren Zonen 44 oberhalb der Heizung 8. Deshalb erfolgt das Abführen des Hg-haltigen Abgases 16 aus der heißen Reaktionszone 7 des Reaktors heraus, deren Temperatur vorzugsweise ≦ 300° C beträgt. Das Hg-haltige Abgas 16 verläßt den Reaktor 1 über die Verbindungsleitung 17, welche den Abschnitt 41 mit ihrem Anschlußteil 45 allseitig umgibt und nach oben geschlossen ist.

## Patentansprüche

1. Verfahren zum Aufarbeiten von mit Schwermetall beladenen Aktivkohlen, insbesondere Koks, welche vor der Beladung mit Schwefelsäure dotiert wurden, wobei die beladene Aktivkohle durch einen Reaktor hindurchgeführt wird, der wenigstens eine Desorptionszone aufweist, und innerhalb der Desorptionszone auf Temperaturen um 500° C erwärmt und eine zeitlang bei diesen Temperaturen gehalten und dabei der erwärmte Koks mit einem Schleppgas beaufschlagt wird, welches wenigstens das bei der Erwärmung frei werdende Schwermetall aufnimmt, und der gereinigte Koks nach dem Durchgang durch die Desorptinszone einer weiteren Verwendung zugeführt wird, dadurch gekennzeichnet, daß das beladene Schleppgas unter Zufuhr von Luft durch eine ruhende Schüttung aus mit Schwefelsäure dotiertem Koks hindurchgeleitet wird, welcher das Schwermetall adsorbiert.

2. Verfahren nach Anspruch 1, dadurch gekennzeichnet, daß man den beladenen Koks etwa 5 bis 20 min, vorzugsweise 10 bis 15 min lang auf der Desorptionstemperatur um 500° C hält.

3. Verfahren nach einem der Ansprüche 1 oder 2, dadurch gekennzeichnet, daß man den Koks im Anschluß an die Desorption abkühlt.

4. Verfahren nach einem der vorhergehenden Ansprüche 1 bis 3, dadurch gekennzeichnet, daß man ein Inertgas, wie beispielsweise CO₂ oder N₂ als Schleppgas verwendet.

5. Verfahren nach einem der vorhergehenden Ansprüche 1 bis 3, dadurch gekennzeichnet, daß man Luft als Schleppgas verwendet.

6. Verfahren nach einem der vorhergehenden Ansprüche 1 bis 5, dadurch gekennzeichnet, daß man den vom Schwermetall desorbierten Koks im Kessel verbrennt.

7. Verfahren nach Anspruch 1, dadurch gekennzeichnet, daß man die aus der ruhenden Schüttung austretenden Gase in den Kessel einer Verbrennungsanlage einleitet.

8. Verfahren zur Reinigung der Rauchgase einer Verbrennungsanlage, insbesondere Müllverbrennungsanlage, wobei die Schwermetalle aus den Rauchgasen mit Aktivkohlen, insbesondere Koks, entfernt werden und diese mit Schwermetallen beladenen Aktivkohlen bzw. der Koks mit dem Verfahren nach einem oder mehreren der Ansprüche 1 - 7 aufgearbeitet werden.

9. Verfahren nach Anspruch 8, dadurch gekennzeichnet, daß als Reinigungs- bzw. Adsorptionsmittel für mit Schwermetallen beladene Rauchgas einer Müllverbrennungsanlage Herdofenkoks aus Braunkohle verwendet wird.

10. Vorrichtung zum Aufarbeiten von beladenen Aktivkohlen, insbesondere Koks, mit einer ersten Reaktionszone (7) zum Hindurchführen der beladenen Aktivkohle (3), wobei die erste Reaktionszone mit einer Heizung (8) und einer Einrichtung (9) zum Einleiten eines Schleppgases (10) in den beheizten Koks versehen ist, dadurch gekennzeichnet, daß der Koks (3) vor der Beladung mit Schwefelsäure dotiert ist und daß eine zweite mit einem Adsorptionsmittel gefüllte Reaktionszone (24) zum Hindurchleiten des Schleppgases (16) vorgesehen ist, das nach der Desorption des Kokses (3) mit Schwermetall enthaltenden Schadstoffen beladen ist.

11. Vorrichtung nach Anspruch 10, dadurch gekennzeichnet, daß im Anschluß an die erste Reaktionszone (7) eine Zone (12) zum Abkühlen des Kokses (3) vorgesehen ist.

12. Vorrichtung nach Anspruch 10, dadurch gekennzeichnet, daß vor der zweiten Reaktionszone (24) ein Anschluß (23) zum Zuführen von Luft vorgesehen ist.

13. Vorrichtung nach Anspruch 10, dadurch gekennzeichnet, daß als Adsorptionsmittel in der zweiten Reaktionszone (24) eine Schüttung von Koks, insbesondere Herdofenkoks aus Braunkohle, vorgesehen ist.

14. Vorrichtung nach Anspruch 10, dadurch gekennzeichnet, daß zwischen der ersten (7) und der zweiten Reaktionszone (24) eine Verbindungsleitung (17) vorgesehen ist, mittels welcher die Reaktionszone (24) von der Reaktionszone (7) trennbar ist.

15. Vorrichtung nach Anspruch 14, dadurch gekennzeichnet, daß die Verbindungsleitung (17) mit wenigstens einem Absperrorgan (19) versehen ist.

16. Vorrichtung nach Anspruch 11, dadurch gekennzeichnet, daß in der zum Abkühlen des Kokses vorgesehenen Zone (17) Wärmetauschereinbauten (13) angeordnet sind.

17. Vorrichtung nach einem der vorhergehenden Ansprüche 10, 11 und 14 bis 16, dadurch gekennzeichnet, daß die erste Reaktionszone (7) und die Zone (12) zum Abkühlen des Kokses (3) von oben nach unten innerhalb eines senkrechten Reaktionsrohres (1) vorgesehen sind, welches an seinen beiden Enden eine Zellenradschleuse (2, 14) zum Einführen von beladenem Koks (3) bzw. zum Abziehen von desorbiertem und ggf. gekühltem Koks (15) aufweist sowie an seinem oberen Ende mit einem Anschluß (6) zum Herausführen des mit den Schadstoffen beladenen Schleppgases (16) versehen ist.

18. Vorrichtung nach einem der vorhergehenden Ansprüche 10 und 12 bis 14, dadurch gekennzeichnet, daß die zweite Reaktionszone (24) in einem transportablen und verschließbaren Behälter (18) angeordnet ist.

## Claims

1. A process for regenerating activated carbons, in particular coke, which are loaded with heavy metal and which were doped prior to loading with sulphuric acid, wherein the loaded activated carbon is passed through a reactor which has at least one desorption zone and heated within the desorption zone to temperatures of around 500°C and maintained for a time at those temperatures and in that operation the heated coke is acted upon by an entrainment gas which takes up at least the heavy metal which is set free in the heating operation, and the cleaned coke, after passing through the desorption zone, is passed to a further use, characterized in that the loaded entrainment gas is passed with a feed of air through a stationary fill comprising coke which is doped with sulphuric acid and which adsorbs the heavy metal.

2. A process according to claim 1 characterised in that the loaded coke is maintained at the desorption temperature of around 500°C for about 5 to 20 minutes and preferably 10 to 15 minutes.

3. A process according to one of claims 1 and 2 characterised in that the coke is cooled down subsequently to the desorption operation.

4. A process according to one of preceding claims 1 to 3 characterized in that an inert gas such as for example CO₂ or N₂ is used as the entrainment gas.

5. A process according to one of preceding claims 1 to 3 characterized in that air is used as the entrainment gas.

6. A process according to one of preceding claims 1 to 5 characterized in that the coke which is desorbed of the heavy metal is burnt in a boiler.

7. A process according to claim 1 characterized in that the gases issuing from the stationary fill are introduced into the boiler of a combustion installation.

8. A process for cleaning the flue gases from a combustion installation, in particular a refuse incineration installation, wherein the heavy metals are removed from the flue gases with activated carbons, in particular coke, and said activated carbons or the coke loaded with heavy metals are regenerated with the process according to one of more of clams 1 to 7.

9. A process according to clam 8 characterized in that hearth furnace coke from brown coal is used as a cleaning or adsorption agent for flue gas, loaded with heavy metals, from a refuse incineration installation.

10. Apparatus for regenerating loaded activated carbons, in particular coke, comprising a first reaction zone (7) for the loaded activated carbon (3) to be passed therethrough, wherein the first reaction zone is provided with a heating means (8) and a means (9) for introducing an entrainment gas (10) into the heated coke, characterized in that the coke (3) is doped prior to loading with sulphuric acid and that there is provided a second reaction zone (24) which is filled with an adsorption agent for the passage therethrough of the entrainment gas (16) which after desorption of the coke (3) is loaded with noxious substances containing heavy metal.

11. Apparatus according to claim 10 characterized in that a zone (12) for cooling down the coke (3) is provided subsequently to the first reaction zone (7).

12. Apparatus according to claim 10 characterized in that a connection (23) for the feed of air is provided upstream of the second reaction zone (24).

13. Apparatus according to claim 10 characterized in that the adsorption agent in the second reaction zone (24) is a fill of coke, in particular hearth furnace coke from brown coal.

14. Apparatus according to claim 10 characterized in that provided between the first reaction zone (7) and the second reaction zone (24) is a connecting conduit (17), by means of which the reaction zone (24) can be separated from the reaction zone (7).

15. Apparatus according to claim 14 characterized in that the connecting conduit (17) is provided with at least one shut-off member (19).

16. Apparatus according to claim 11 characterized in that heat exchanger components (13) are arranged in the zone (17) provided for cooling down the coke.

17. Apparatus according to one of preceding clams 10, 11 and 14 to 16 characterized in that the first reaction zone (7) and the zone (12) for cooling down the coke (3) are provided downwardly within a perpendicular reaction tube (1) which at its two ends has a respective cell wheel lock device (2, 14) for the introduction of loaded coke (3) and for the removal of desorbed and possibly cooled coke (15) respectively, and is provided at its upper end with a connection (6) for carrying away the entrainment gas (16) loaded with the noxious substances.

18. Apparatus according to one of preceding claims 10 and 12 to 14 characterized in that the second reaction zone (24) is arranged in a transportable and closable container (18).

## Revendications

1. Procédé pour régénérer des charbons, tels que du coke en particulier, qui sont chargés de métaux lourds et ont été dopés à l'acide sulfurique avant de recevoir cette charge, ce procédé consistant à faire passer le charbon actif chargé à travers un réacteur, qui présente au moins une zone de désorption, à réchauffer le charbon dans la zone de désorption à des températures de l'ordre de 500° C, et à le maintenir à ces températures pendant un certain temps, pour soumettre le charbon ainsi chauffé à l'action d'un gaz de lavage qui entraîne au moins les métaux lourds libérés sous l'effet du chauffage, après quoi on envoie vers un autre poste d'utilisation le coke épuré après son passage à travers la zone de désorption, caractérisé en ce que l'on fait passer le gaz de lavage chargé à travers un amas de matière sans agitation, en y insufflant de l'air, cet amas de matière étant constitué de coke dopé à l'acide sulfurique qui adsorbe les métaux lourds.

2. Procédé selon la revendication 1, caractérisé en ce que l'on maintient le coke chargé à la température de désorption d'environ 500° C pendant une durée d'environ 5 à 20 minutes, cette durée étant de 10 à 15 minutes de préférence.

3. Procédé selon l'une des revendications 1 ou 2, caractérisé en ce que l'on refroidit le coke après la désorption.

4. Procédé selon l'une des revendications 1 à 3, caractérisé en ce que l'on utilise comme gaz de lavage un gaz inerte comme par exemple CO₂ ou N₂.

5. Procédé selon l'une des revendications 1 à 3, caractérisé en ce que l'on utilise de l'air comme gaz de lavage.

6. Procédé selon l'une des revendications 1 à 5, caractérisé en ce que l'on brûle dans la chaudière le coke débarrassé des métaux lourds.

7. Procédé selon la revendication 1, caractérisé en ce que l'on envoie dans la chaudière d'une usine d'incinération les gaz qui sortent de l'amas de matière sans agitation.

8. Procédé pour épurer les gaz de combustion d'une usine d'incinération, en particulier d'une usine d'incinération d'ordures ménagères, caractérisé en ce qu'on sépare les métaux lourds des gaz de combustion au moyen de charbons actifs, en particulier avec du coke, et en ce que l'on régénère ces charbons actifs ou ce coke, chargés de métaux lourds, à l'aide du procédé défini par l'une ou plusieurs des revendications 1 à 7.

9. Procédé selon la revendication 8, caractérisé en ce que l'on utilise du coke de four à sole obtenu à partir de lignite comme agent d'épuration ou d'adsorption pour traiter le gaz de combustion chargé de métaux lourd d'une usine d'incinération d'ordures ménagères.

10. Dispositif pour régénérer des charbons actifs chargés, et en particulier du coke, comportant une première zone de réaction (7) pour y faire passer le charbon actif chargé (3), cette première zone de réaction étant pourvue d'un système de chauffage (8) et d'un système (9) prévu pour introduire un gaz de lavage (10) dans le coke chauffé, caractérisé en ce que le coke est dopé à l'acide sulfurique avant d'être chargé, et en ce qu'une deuxième zone de réaction (24) garnie de matière adsorbante est prévue pour y faire passer le gaz de lavage (16) qui est chargé de produits polluants contenant des métaux lourds après la désorption du coke (3).

11. Dispositif selon la revendication 10, caractérisé en ce qu'une autre zone (12), rattachée à la première zone de réaction (7), est prévue pour le refroidissement du coke (3).

12. Dispositif selon la revendication 10, caractérisé en ce qu'un raccord d'insufflation d'air (23) est prévu en amont de la deuxième zone de réaction (24).

13. Dispositif selon la revendication 10, caractérisé en ce qu'un agent d'adsorption constitué par un amas de coke, en particulier de coke de four à sole obtenu à partir de lignite, est prévu dans la deuxième zone de réaction (24).

14. Dispositif selon la revendication 10, caractérisé en ce qu'une canalisation de liaison (17) est prévue entre la première zone de réaction (7) et la deuxième zone de réaction (24), cette canalisation de liaison comportant des moyens pour isoler la zone de réaction (24) de la zone de réaction (7).

15. Dispositif selon la revendication 14, caractérisé en ce que la canalisation de liaison (17) est pourvue d'au moins une vanne d'arrêt (19).

16. Dispositif selon la revendication 11, caractérisé en ce qu'un sytème d'échangeurs thermiques (13) est disposé dans la zone (12) prévue pour le refroidissement du coke.

17. Dispositif selon l'une des revendications 10, 11 et 14 à 16, caractérisé en ce que la première zone de réaction (7) et la zone de refroidissement (12) du coke (3) sont disposées du haut en bas à l'intérieur du corps tubulaire vertical d'un réacteur (1) pourvu à chaque extrémité d'une vanne rotative à palettes (2,14), qui servent respectivement à l'introduction du coke chargé (3) et à l'extraction du coke épuré par désorption (15) et éventuellement refroidi, le corps du réacteur comportant à son extrémité supérieure un raccord (6) pour l'évacuation du gaz de lavage (16) chargé des produits polluants.

18. Dispositif selon l'une des revendications 10 et 12 à 14, caractérisé en ce que la deuxième zone de réaction (24) est disposée dans un récipient (18) qui est transportable et pourvu de moyens d'obturation.
